# EUROPEAN PATENT APPLICATION

(11) **EP 2 998 911 A1**
(43) Date of publication of application: **23.03.2016**
(21) Application number: 15000591.6
(22) Date of filing: 02.03.2015
(51) Int. Cl.: G06Q 10/02

(54) **Corporate recognition for travel related services**

(30) Priority: 19.09.2014 US 201414491182
(71) Applicant: Amadeus S.A.S., 06410 Biot (FR)
(72) Inventor: Elf, Charlotte, 06560 Valbonne (FR); Thomas, Fiona, 06560 Valbonne (FR); Choubert, Luc, 06410 Biot (FR); Kokorina, Gelena, 06410 Biot (FR)
(74) Representative: Samson & Partner Patentanwälte mbB

(57) **Abstract**

Methods, systems, and computer program products for managing inventory availability for travel inventory items associated with travel services. An inventory request is received at an inventory system for at least one travel inventory item that includes a corporate identifier and corporate value data associated with a passenger name record from a reservation system. Availability for the at least one travel inventory item is determined. The availability is determined by determining an effective yield for the at least one travel inventory item based on the corporate value data, where the availability is based at least in part on the effective yield. An availability response is communicated to the reservation system that includes the determined availability for the at least one travel item.

## Description

### BACKGROUND

The invention is generally related to computers and computer software, and in particular to methods, systems, and computer program products for processing travel requests, managing inventory related to travel services, and managing reservations.

Computer technology is increasingly used in the travel industry to manage and support travel reservations, as well as data associated therewith. In particular, third party reservation agents, such as travel agents, and/or customers (e.g., travelers) often utilize computer-based devices to interface with a travel reservation system, such as a Global Distribution System (GDS), to book travel arrangements and/or travel-related services for the customer. When reserving travel-related services using such reservation terminals in communication with such travel reservation systems, a travel agent and/or customer may initiate a reservation session between a client device and the travel reservation system to book one or more travel inventory items corresponding to the travel-related services (e.g., flights, hotels, rail transportation, dining reservations, etc.) for the customer during the reservation session. In turn, the travel reservation system may initiate an inventory session with one or more inventory systems that manage inventory for one or more travel merchants and/or travel service providers.

Because computer technology is utilized to increasingly manage and support travel reservations, a continuing need exists in the art for improved computer-based travel planning and reservation systems, as well as improved methods and computer program products, for processing travel requests, managing inventory related to travel services, and managing reservations.

### SUMMARY

Embodiments of the invention generally comprise methods, systems, and computer program products for managing inventory availability for travel inventory items associated with travel services. An inventory system may receive an availability request for at least one travel inventory item that includes a corporate identifier and corporate value data associated with a passenger name record from a reservation system. An effective yield may be determined for the at least one travel inventory item based at least in part on the corporate value data and/or the corporate identifier, and an availability may be determined for the at least one travel inventory item based at least in patron the effective yield. An availability response may be communicated to the reservation system that includes the determined availability for the at least one travel inventory item.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of a reservation system, one or more inventory systems, one or more client devices, and one or more departure control systems consistent with embodiments of the invention.
FIG. 2 is a block diagram of a reservation system of FIG. 1.
FIG. 3 is a block diagram of an inventory system of FIG. 1.
FIG. 4 is a block diagram of a departure control system of FIG. 1.
FIG.5 is a flowchart illustrating a sequence of operations that may be performed by the inventory system of FIGS. 1 and 3 to process an availability request.
FIG. 6 is an example graphical user interface that may be output by the inventory system of FIG. 1.
FIG. 7 is an example graphical user interface that may be output by the inventory system of FIG. 1.
FIG. 8 is a flowchart illustrating a sequence of operations that may be performed by the inventory system of FIGS. 1 and 3 to process a waitlist request.
FIG. 9 is a flowchart illustrating a sequence of operations that may be performed by the inventory system of FIGS. 1 and 3 to determine seating information responsive to receiving a booking request.
FIG. 10 is a flowchart illustrating a sequence of operations that may be performed by the reservation system, inventory system, and/or departure control system of FIGS. 1-4 to determine a process customer value.
FIGS. 11A-D are block diagrams that illustrate an example determination of process customer values.

### DETAILED DESCRIPTION

Embodiments of the invention provide systems, methods, and computer program products for processing travel requests, managing inventory for travel services, and/or managing travel reservations. Generally, embodiments of the invention may process travel requests, manage inventory for travel services, and/or manage travel reservations based at least in part on a corporate identifier of an associated passenger name record (PNR).

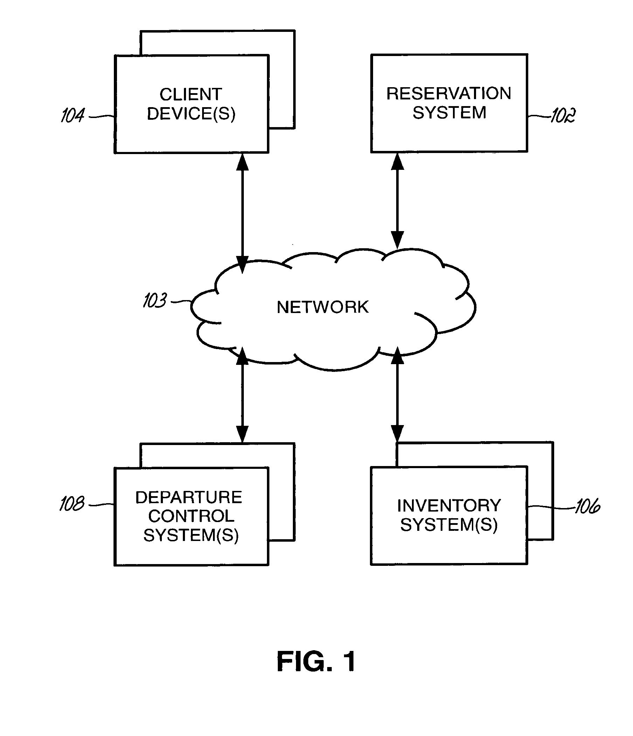

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. One or more client devices 104 may be connected to the communication network 103, such that a customer or reservation agent (e.g., travel agency or other such travel reservation service) may initialize a reservation session with the reservation system 102 to communicate a travel request and/or other such relevant data to the reservation system 102. The client device 104 may be a personal computing device, tablet computer, thin client terminal, smart phone and/or other such computing device.

One or more servers for one or more inventory systems 106 of one or more travel merchants are connected to the communication network 103. The reservation system 102 may initialize an inventory session over the communication network 103 with each inventory system 106 for which a travel inventory item is to be booked. Consistent with embodiments of the invention, a reservation agent or customer (i.e., a traveler) may interface with the reservation system 102 using the client device 104 in a reservation session to provide data for a travel request. In turn, the reservation system may interface with each inventory system 106 of each travel merchant that provides a travel inventory item associated with the travel request that generally requires an availability determination (e.g., a flight, rail ticket, hotel room, event ticket, etc.) to determine availability and/or pricing. As shown, one or more departure control systems 108 may be connected to the network 103. In general, a departure control system 108 includes one or more devices for processing passenger information prior to use of a travel service, such as electronic check-in kiosks, baggage handling systems, mobile boarding systems, passenger boarding devices, terminals, and/or other such devices. Generally, a departure control system 108 may receive reservation information from the reservation system 102 stored in a passenger name record (which may also be referred to as a customer product record). The departure control system 108 may update reservation information as one or more passengers of the passenger name record check-in, drop baggage, board, depart, arrive, etc. While the reservation system 102, inventory system 106, and departure control system 108 are described herein as separate entities, the embodiments of the invention are not so limited. In some embodiments, various hardware, software components, and/or sequences of operations described with respect to the reservation system 102, inventory system 106, or departure control system 108 may be implemented on the reservation system 102, inventory system 106, and/or departure control system 108. Furthermore, as will be appreciated, in some embodiments the reservation system 102, inventory system 106, and/or departure control system 108 may be components of a global distribution system (GDS).

As will be described in detail below, consistent with embodiments of the invention, an interface may be generated by the reservation system such that a user (i.e., a traveler or a travel agent) may input information at a client device 104 that may be utilized to generate a travel request that may in turn be used to determine one or more travel solutions consistent with embodiments of the invention. To determine the one or more travel solutions, the reservation system 102 interfaces with one or more inventory systems 106 to determine an availability for travel inventory items to be booked for a travel solution. In this regard, the reservation system 102 may communicate an availability request to the inventory system 106, and the inventory system 106 may determine an availability for each requested travel inventory item. An availability response may be communicated to the reservation system 102 that includes the determined availability for each travel inventory item of the availability request. Consistent with some embodiments of the invention, the inventory system may determine availability for a travel inventory item based at least in part on a corporate identifier, corporate value data, and/or one or more business rules associated with the availability request. Once availability has been determined for the one or more travel inventory items of the one or more travel solutions, the reservation system 102 may communicate a travel response to the client device 104 that identifies the travel inventory items, availability, and/or fares for each travel solution.

Moreover, consistent with some embodiments of the invention, the reservation system 104 may determine seating, re-assignment of seating, and/or generate a seat map for selection of a seat based at least in part on corporate value data. Similarly, special services (e.g., ancillary services) may be determined for a traveler of a passenger name record based at least in part on corporate value data. For example, baggage services, meal services, lounge access, extended boarding time, priority boarding, and/or other such additional services may be determined for a traveler associated with a passenger name record by the departure control system 108.

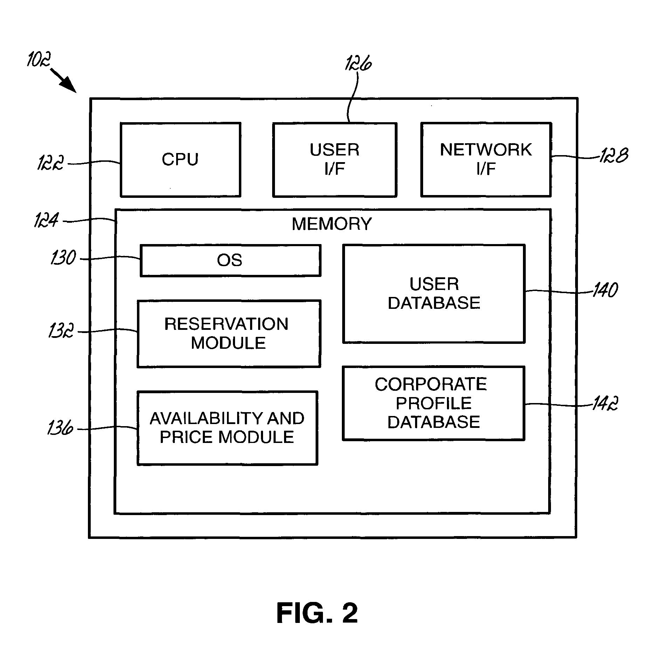

FIG. 2 provides a block diagram that illustrates the components of the one or more servers of the reservation system 102. The reservation system 102 includes at least one processor 122 including at least one hardware-based microprocessor and a memory 124 coupled to the at least one processor 122. The memory 124 may represent the random access memory (RAM) devices comprising the main storage of the reservation system 102, as well as any supplemental levels of memory, e.g., cache memories, non-volatile or backup memories (e.g., programmable or flash memories), read-only memories, etc. In addition, memory 124 may be considered to include memory storage physically located elsewhere in the travel and reservation system 102, e.g., any cache memory in a microprocessor, as well as any storage capacity used as a virtual memory, e.g., as stored on a mass storage device or on another computer coupled to the reservation system 102.

For interface with a user or operator, the reservation system 102 may include a user interface 126 incorporating one or more user input/output devices, e.g., a keyboard, a pointing device, a display, a printer, etc. Otherwise, data may be communicated to and from another computer or terminal (e.g., the client device 104, the inventory system 106) over a network interface 128 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 130 and executes or otherwise relies upon various computer software applications, components, programs, objects, modules, engines, data structures, etc., including for example, a reservation module 132, and an availability and price module 134. In general, the reservation module 132 may be configured to interface with one or more travel merchant systems (e.g., inventory systems 106) to reserve travel services based on received data. The availability and price module 134 may be configured to query inventory systems 106 and receive pricing and availability information for requested travel inventory items of various types of travel services (e.g., a ticket for a flight, a ticket for rail travel, etc.). Furthermore, memory 124 may include a user database 140 that stores user records. Each user record may correspond to a traveler, and the user record may store a passenger name record (PNR) associated with the traveler, identification information, user preferences, user related identifiers (e.g., frequent flyer identification number), reservation information, contact information, frequent flyer data (e.g., frequent flyer tier level, frequent flyer miles, frequent flyer priority code, etc.), and/or related information.

The memory 124 also includes a corporate profile database 142 that stores corporate records that each corresponds to a corporate and/or business entity (hereinafter referred to as a corporation) and a particular travel merchant. Each corporate record includes a corporate identifier associated with the corporation and corporate value data corresponding to the corporation for the particular travel merchant. The corporate value data may include a corporate tier level, a corporate priority code, and/or a corporate customer value. A corporate identifier may generally correspond to an alphanumeric value and be used to identify a corporate record associated with a particular corporation. A corporate tier level generally corresponds to a value of the corresponding corporation for a travel merchant. For example, according to one or more business rules, two or more possible corporate tier levels may be defined that indicate a priority and/or value, such as a gold corporate tier level, a silver corporate tier level, and/or a basic corporate tier level.

A corporate priority code generally corresponds to a value that defines a value and/or priority of a particular corporation to a travel merchant. For example, according to one or more business rules associated with a particular travel merchant, two or more corporate priority code levels may be defined, such as level 1, level 2, level 3, etc. In this example, a PNR having a corporate identifier associated with a corporation having a corporate priority code of level 1 may have higher priority on a waitlist than a PNR having a corporate identifier associated with a corporation having a corporate priority code of level 2.

A corporate customer value generally corresponds to a value that a particular corporation (often referred to as a corporate account) brings to a particular travel merchant, where such corporate customer value may be based at least in part on a profit (e.g., short term profit, average profit, etc.) of the particular travel merchant associated with the particular corporation, a volume of bookings for the particular travel merchant associated with the particular corporation, a strategic importance (e.g., long-term projections), and/or other such considerations. Generally, corporate customer values may be used to further differentiate priority and/or value between corporations for travel booking and/or travel related services.

In general, the reservation system 102 may manage travel reservations for one or more travel merchants. As such, a corporate record for a particular corporation and a particular travel merchant may include a corporate identifier for the particular travel merchant associated with the reservation system that supports corporate recognition processing for travel reservations and related services. Moreover, the corporate record may store a corporate tier level, a corporate priority code, and/or a corporate customer value for a particular corporation for the particular travel merchant associated with the reservation system 102.

Moreover, various applications, components, programs, objects, modules, engines etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a reservation system 102 and/or modules of the reservation system 102 may be implemented in one or more servers. Consistent with embodiments of the invention, the modules 132, 134 and/or other such modules/applications may be executing on one or more servers of the reservation system 102, and the modules 132, 134 may cause the processor 122 of the reservation system 102 to perform operations consistent with embodiments of the invention.

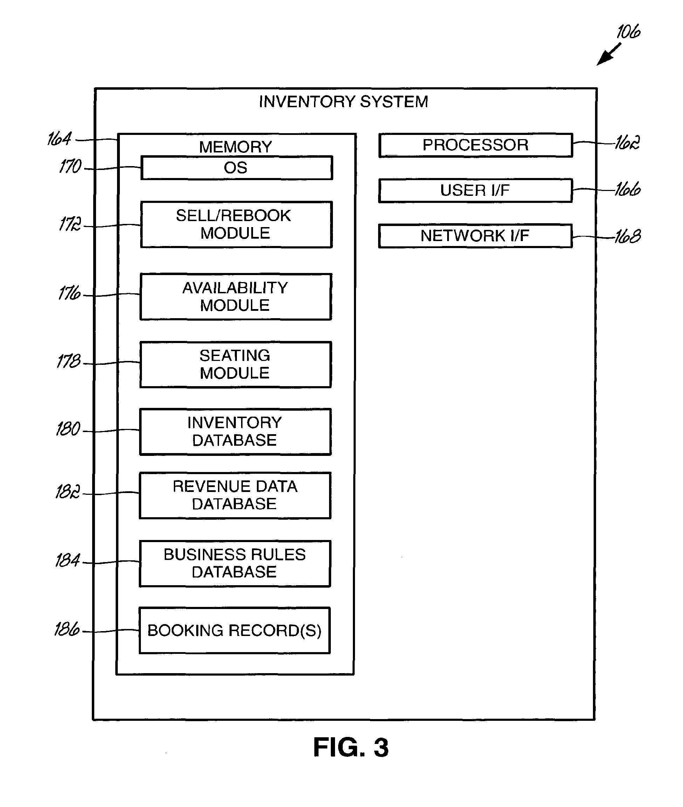

Referring to FIG. 3, this figure provides a block diagram that illustrates the components of the one or more servers of an inventory system 106 consistent with embodiments of the invention. The inventory system 106 includes at least one processor 162 including at least one hardware-based microprocessor and a memory 164 coupled to the at least one processor 162. The memory 164 may represent the random access memory (RAM) devices comprising the main storage of the inventory system 106, as well as any supplemental levels of memory, e.g., cache memories, non-volatile or backup memories (e.g., programmable or flash memories), read-only memories, etc. In addition, memory 164 may be considered to include memory storage physically located elsewhere in the inventory system 106, e.g., any cache memory in a microprocessor, as well as any storage capacity used as a virtual memory, e.g., as stored on a mass storage device or on another computer coupled to the inventory system 106 via the communication network 103, such as a memory of the reservation system 102.

For interface with a user or operator, the inventory system 106 may include a user interface 166 incorporating one or more user input/output devices, e.g., a keyboard, a pointing device, a display, a printer, etc. Otherwise, input may be retrieved via another computer or terminal (e.g., the client device 104 and/or the reservation system 102) over a network interface 168 coupled to the communication network 103. The inventory system 106 also may be in communication with one or more mass storage devices, which may be, for example, internal hard disk storage devices, external hard disk storage devices, external databases, storage area network devices, etc.

The inventory system 106 typically operates under the control of an operating system 170 and executes or otherwise relies upon various computer software applications, components, programs, objects, modules, data structures, etc., including for example, a sell/rebook module 172, an availability module 176, and/or a seating module 178. Furthermore, the memory 164 of the inventory system 106 may generally store one or more databases including for example, an inventory database 180 that stores data associated with one or more travel inventory items managed by the inventory system 106, a revenue data database 182 that stores revenue data for one or more travel inventory items, and/or a business rules database 184 that stores business rules/system parameters for the inventory system of the associated travel merchant. Each database 180-184 may include data and supporting data structures that store and organize the data. In particular, each database 180-184 may be arranged with any database organization and/or structure including, but not limited to, a relational database, a hierarchical database, a network database, and/or combinations thereof. A database management system in the form of a computer software application executing as instructions on a processing unit of the inventory system 106 is used to access the information or data stored in records of the databases 180-184 in response to a query.

In particular, the inventory database 180 generally stores inventory data corresponding to travel inventory items of a travel merchant that the inventory system 106 is configured to manage. The inventory data that may be stored in the inventory database 180 may include available travel inventory items, uncommitted booked travel inventory items, committed booked travel inventory items, a load factor for a group/type of travel inventory items (e.g., the number of booked seats on a flight-date for a cabin compared to the total number of seats on the flight-date for the cabin), time to departure for each type of travel inventory item, and/or other such information.

Consistent with embodiments of the invention the modules 172, 176, 178 and/or other such modules/applications may be executing on the inventory system 106, and the modules 172, 176, 178may cause the processor 162 to perform operations consistent with embodiments of the invention. The sell/rebook module 172 may be configured to analyze a received availability request, and determine a travel inventory item for the inventory request. The availability module 176 may query the inventory database 180 to determine travel inventory item availability for received availability requests.

In general, the availability module 176 may calculate travel inventory item availability based at least in part on data stored in the inventory database 180. Furthermore, in some embodiments, the availability module 176 may determine travel inventory item availability based at least in part on corporate value data and/or a corporate identifier received in a corresponding availability request. In these embodiments, the availability module 176 may determine travel inventory item availability based on the received corporate value data, corporate identifier, and/or one or more business rules stored in the business rules database 184.

In general, the business rules database 184 may store one or more business rules that correspond to corporate value data and define how the sell/rebook module 172 and/or the availability module 176 process availability requests that include corporate value data. For example, a business rule may identify a particular corporate identifier for which an availability determination for travel inventory items may result in more availability and/or a lower yield. Generally, business rules may be defined by a travel merchant via an interface (e.g., a user interface generating a graphical user interface, a network interface supporting a web-based graphical user interface, etc.) that may interface with the reservation system 102 (as well as the inventory system 106 and/or departure control system 108). Through the interface, a travel merchant may define a business rule by specifying criteria required for the business rule to be applicable and conditions and/or specifications to apply if the criteria are met.

The seating module 178 may be configured to determine seats and/or generate a seat map for a travel inventory item of the inventory system 106. Generally, the determined seats and/or seat map may be based at least in part on corporate value data and/or one or more business rules. Furthermore, the seating module 178 may be configured to re-assign seats based at least in part on corporate value data and/or one or more business rules.

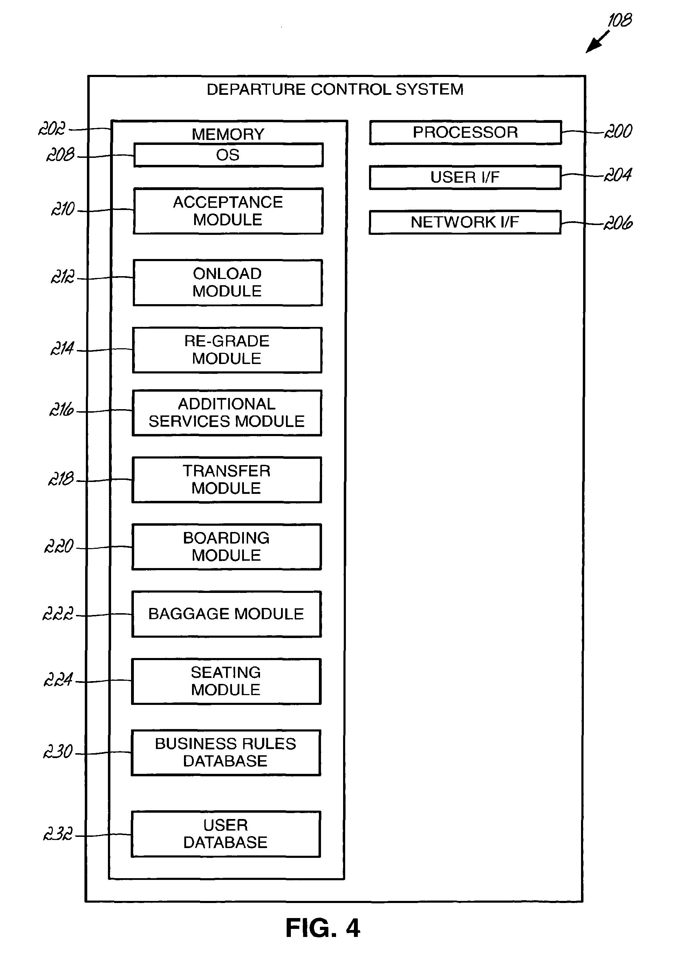

FIG. 4 provides a block diagram that illustrates the components of the departure control system 108 consistent with embodiments of the invention. The departure control system 108 includes at least one processor 200 including at least one hardware-based microprocessor and a memory 202 coupled to the at least one processor 200. The memory 202 may represent the random access memory (RAM) devices comprising the main storage of the departure control system 108, as well as any supplemental levels of memory, e.g., cache memories, non-volatile or backup memories (e.g., programmable or flash memories), read-only memories, etc. In addition, memory 202 may be considered to include memory storage physically located elsewhere in the departure control system 108, e.g., any cache memory in a microprocessor, as well as any storage capacity used as a virtual memory, e.g., as stored on a mass storage device or on another computer coupled to the departure control system 108 via the communication network 103, such as a memory of the reservation system 102.

For interface with a user or operator, the departure control system 108 may include a user interface 204 incorporating one or more user input/output devices, e.g., a keyboard, a pointing device, a display, a printer, etc. Otherwise, input may be retrieved via another computer or terminal (e.g., the client device 104 and/or the reservation system 102) over a network interface 206 coupled to the communication network 103. The departure control system 108 also may be in communication with one or more mass storage devices, which may be, for example, internal hard disk storage devices, external hard disk storage devices, external databases, storage area network devices, etc.

The departure control system 108 typically operates under the control of an operating system 208 and executes or otherwise relies upon various computer software applications, components, programs, objects, modules, data structures, etc., including for example, an acceptance module 210, an onload module 212, a re-grade module 214, an additional service module 216, a transfer module 218, a boarding module 220, a baggage module 222, and/or a seating module 224. Furthermore, the memory 202 of the inventory system 106 may generally store one or more databases including for example, a business rules database 230 and/or a user database 232. The business rules database 230 generally stores business rules/system parameters for the departure control system 108. The user database 232 generally stores user records, where each user record corresponds to a traveler. Each user record may include one or more passenger name records, traveler information (e.g., a frequent flyer identification, a corporate identifier, etc.), and/or other such information.

Each database 230, 232 may include data and supporting data structures that store and organize the data. In particular, each database 230, 232 may be arranged with any database organization and/or structure including, but not limited to, a relational database, a hierarchical database, a network database, and/or combinations thereof. A database management system in the form of a computer software application executing as instructions on a processing unit of the inventory system 106 is used to access the information or data stored in records of the databases 230, 232 in response to a query.

Consistent with embodiments of the invention the modules 210-224 and/or other such modules/applications may be executing on the departure control system 108, and the modules 210-224 may cause the processor 200 to perform operations consistent with embodiments of the invention. Generally, the acceptance module 210 may be configured to rank customers (i.e., passengers) for a flight based on an airline's business rules associated with onloading/acceptance. Aircraft capacity for the flight may be considered a cutoff, and the acceptance module 210 may determine customers of the highest value to accept for the flight, while lower value customers may be placed on standby. In this regard, the acceptance module 210 may select customers for acceptance based at least in part on user attributes, such as frequent flyer tier level, frequent flyer customer value, corporate tier level, corporate priority code, and/or corporate customer value. In addition, the acceptance module 210 may be configured to determine an amount of time before departure of a flight to open/close customer acceptance, check-in, and opening a boarding gate for the flight. In this regard, the acceptance module 210 may determine each amount of time based at least in part on attributes of the customer, including for example, frequent flyer tier level, frequent flyer customer value, corporate tier level, corporate priority code, and/or corporate customer value. Generally, customers having a higher value based on such attributes for the airline according to one or more business rules of the airline may be determined to have a larger amount of time to check-in, be accepted for a flight, board the flight, etc.

The onload module 212 may be configured to select customers from standby at flight closure time. The onload module 212 may select customers from standby based at least in part on one or more business rules of the airline. Consistent with embodiments of the invention, customers may be selected from standby based at least in part on customer attributes, such as frequent flyer tier level, frequent flyer customer value, corporate tier level, corporate priority code, and/or corporate customer value.

The re-grade module 214 may be configured to select customers/passengers for upgrade on a flight or other such travel service. Consistent with some embodiments of the invention, selecting customers for upgrade may be based at least in part on customer attributes, such as frequent flyer tier level, frequent flyer customer value, corporate tier level, corporate priority code, and/or corporate customer value.

The additional services module 216 may be configured to determine additional services to be offered to a customer (e.g., lounge access, onboard services, priority seating, order of display in customer lists, etc.). Consistent with some embodiments of the invention, determining additional services to be offered for a particular customer may be based at least in part on customer attributes, such as frequent flyer tier level, frequent flyer customer value, corporate tier level, corporate priority code, and/or corporate customer value.

The transfer module 218 may be configured to assign customers to a different flight (such as when a flight is cancelled). When transferring customers, the transfer module 218 may select high value customers for confirmation on earlier flights, more convenient flights (e.g., a direct flight as compared to a flight with stops), etc. Consistent with some embodiments of the invention, transferring customers to different flights may be based at least in part on customer attributes, such as frequent flyer tier level, frequent flyer customer value, corporate tier level, corporate priority code, and/or corporate customer value.

The boarding module 220 may be configured to control generation and/or printing of boarding passes. Consistent with some embodiments of the invention, determination of a boarding priority group for a generated boarding pass may be based at least in part on customer attributes, such as frequent flyer tier level, frequent flyer customer value, corporate tier level, corporate priority code, and/or corporate customer value. Moreover, consistent with some embodiments of the invention, a corporate identifier, corporate tier level, and/or a corporate priority code may be included in the generated and/or printed boarding pass.

The baggage module 222 may be configured to determine a baggage priority for baggage of customers. Consistent with some embodiments of the invention, a particular customer's baggage may be determined to have a higher baggage priority relative to the baggage of other customers based at least in part on customer attributes, such as frequent flyer tier level, frequent flyer customer value, corporate tier level, corporate priority code, and/or corporate customer value. Similarly, the baggage module 222 may be configured to determine a baggage allowance based at least in part on customer attributes, including frequent flyer tier level, frequent flyer customer value, corporate tier level, corporate priority code, and/or corporate customer value.

The seating module 224 may be configured to determine an order in which customers of a flight may be assigned seats for the flight. Furthermore, the seating module 224 may be configured to reassign seats for the flight and/or a seat refresh after a change of aircraft or configuration of the aircraft. Consistent with embodiments of the invention, customer seat assignment and/or re-assignment may be based at least in part on customer attributes, such as frequent flyer tier level, frequent flyer customer value, corporate tier level, corporate priority code, and/or corporate customer value.

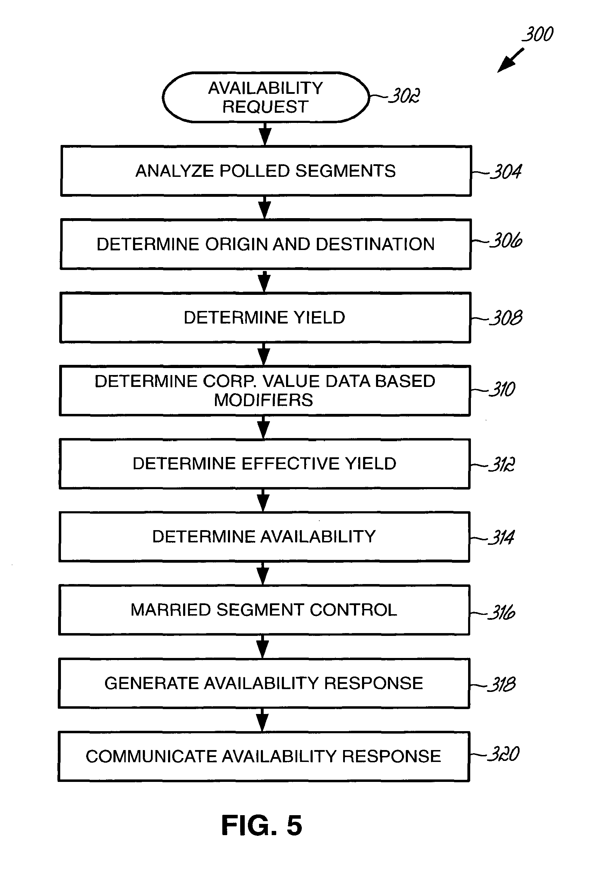

Turning now to FIG. 5, this figure provides a flowchart 300 that illustrates a sequence of operations that may be performed by an inventory system 106 consistent with embodiments of the invention to manage inventory availability for travel inventory items. As shown, the inventory system 106 receives an availability request from a reservation system 102 that identifies at least one travel inventory item, a passenger name record, a corporate identifier, and/or corporate value data (block 302). The inventory system 106 analyzes the request and/or one or more polled (requested) segments of the at least one travel inventory item to determine journey data associated with the request. In general, journey data corresponds to an entire journey that may be comprised of one or more polled and/or previously booked segments. Based on the journey data, the inventory system determines an origin and destination for the one or more polled segments of the at least one travel inventory item (block 306). The inventory system determines a yield for each of the at least one travel inventory items based on the origin and destination and/or journey data (block 308). In general, a yield corresponds to an average revenue that may be obtained from a sale of a travel inventory item of a travel service, where the yield may be based at least in part on bid price, booking class, travel dates, etc. The yield may be retrieved from the revenue data database.

Furthermore, consistent with embodiments of the invention, the inventory system 106 may determine one or more yield modifiers for the yield based at least in part on a corporate identifier and/or corporate value data associated with the passenger name record (block 310). Generally, the corporate value data and/or corporate identifier may be associated with a corporation for which a travel merchant associated with the inventory system 106 may offer lower pricing, higher availability, etc. Based on one or more business rules for the inventory system 106, the corporate value data, and/or the corporate identifier, the inventory system may determine one or more yield modifiers that may be applied to the determined yield to thereby determine an effective yield (block 312). Based on the effective yield, the inventory system 106 may determine an availability for each of the at least one travel inventory items of the availability request. In some embodiments, after determining availability, the inventory system may perform married segment control (block 316) to prevent cancellation of booked segments of a common origin and destination upon which availability was at least partially determined. After determining the availability, the inventory system 106 may generate an availability response based on the determined availability for the at least one travel inventory items (block 318), and the inventory system 106 may communicate the availability response to the reservation system 102.

Therefore, as described in FIG. 5, some embodiments of the invention may be configured to determine availability for one or more travel inventory items based at least in part on a corporation identified by the passenger name record. In some embodiments, availability may be determined based at least in part on corporate value data associated with the identified corporation. For example, availability requests for passenger name records associated with a high value corporate client for a travel merchant may lead to a higher determination of availability than compared to an availability request not associated with the corporate client. In turn, the higher availability may facilitate lower booking prices, more available booking classes, etc. Generally, embodiments may determine an origin and destination associated with the polled segments, determine a yield and/or effective yield for each polled segment, and determine an availability for each travel inventory item based at least in part on the yield. The yield may be modified to an effective yield based on one or more yield modifiers. Yield modifiers may be determined based at least in part on one or more business rules, a corporate identifier, and/or corporate value data.

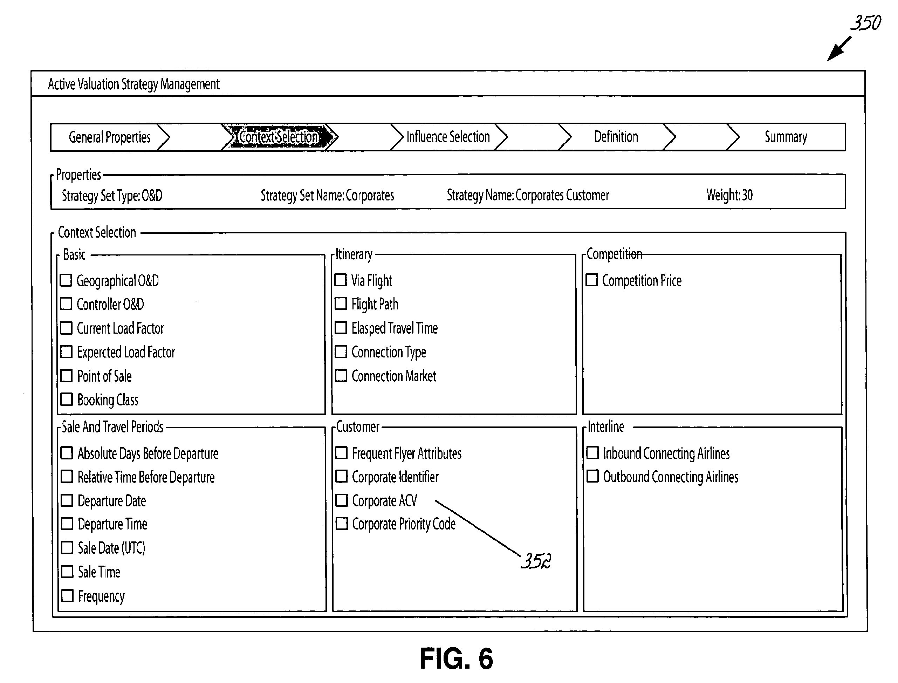

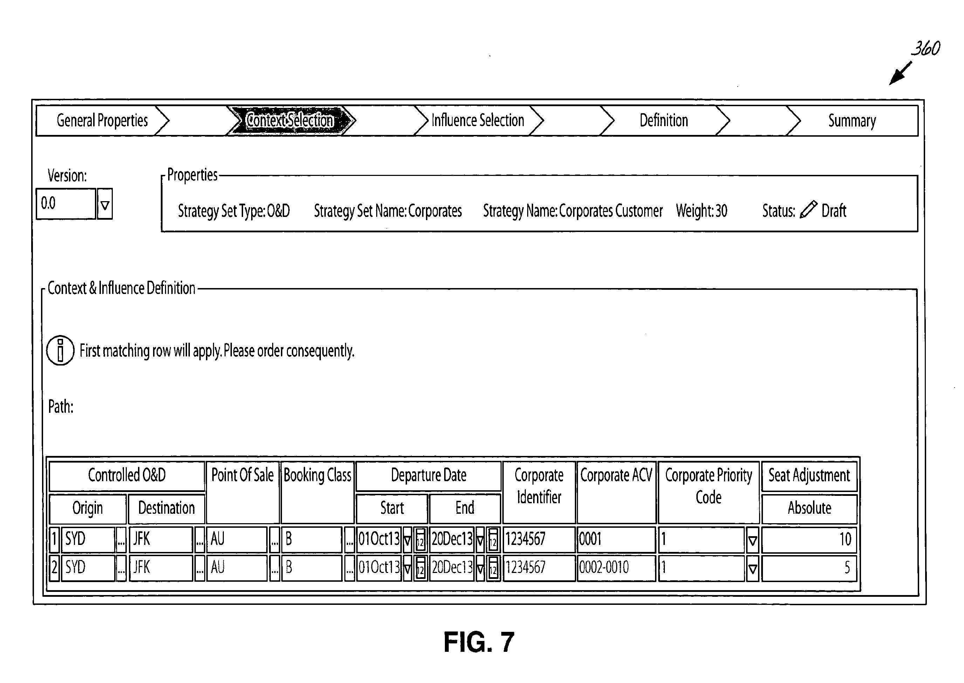

FIG. 6 provides an example output of a graphical user interface 350 that may be displayed for a user of the inventory system 106 to configure one or more business rules and/or define one or more yield modifiers based at least in part on a corporate identifier and/or corporate value data. As shown in the example provided in FIG. 6, the graphical user interface 350 may include one or more fields 352 that allow a user to configure one or more business rules/settings associated with corporate recognition use in availability determinations. FIG. 7 provides an example output of a graphical user interface 360 that may be displayed for a user of the inventory system 106 to configure one or more business rules and/or define one or more yield modifiers associated with a corporate identifier and/or corporate value data. As shown in the example provided in FIG. 7, the graphical user interface 360 may include one or more fields 362 that allow a user to configure one or more business rules/settings associated with corporate recognition user in availability determinations.

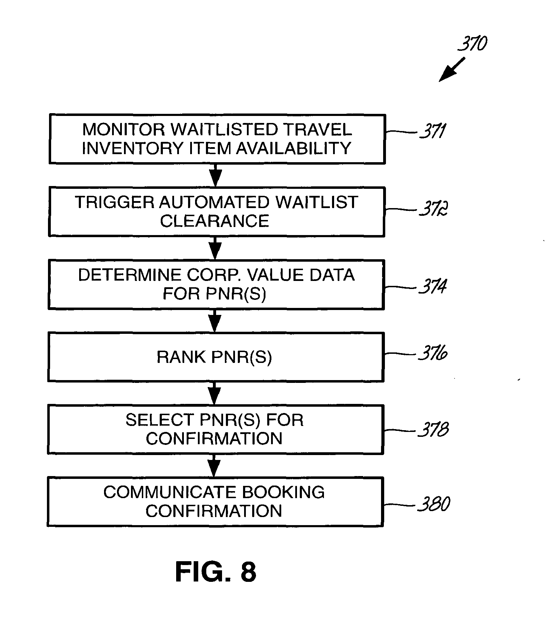

Turning now to FIG. 8, this figure provides a flowchart 370 that illustrates a sequence of operations that may be performed by the inventory system 106 to perform waitlist clearance consistent with some embodiments of the invention. In general, an inventory system 106 may monitor travel inventory items to determine if a waitlisted travel inventory item becomes available for confirmation for a waitlisted PNR (block 371). In response to a previously reserved travel inventory item becoming available, the inventory system 106 may initialize an automated waitlist clearance (block 372) and the inventory system 106 may communicate to a reservation system 102 that waitlist clearance has been initialized. Passenger name records corresponding to a waitlist for the travel inventory item may be analyzed to determine a corporate identifier and/or corporate value data for each passenger name record (block 374). Based on the corporate value data and/or other information determined from the passenger name record (e.g., frequent flyer data, alliance related data, etc.), the inventory system 106 may rank the passenger name records (block 376). One or more passenger name records associated with the waitlist request may be selected for booking confirmation (block 378) based at least in part on the ranking of the passenger name records. For example, a particular passenger name record including a corporate identifier that corresponds to a corporation having a higher corporate tier level, a corporate priority code, and/or a corporate customer value relative to other passenger name records also on the waitlist would be ranked highest and a booking for the particular passenger name record may be confirmed from the waitlist before other passenger name records also on the waitlist. The inventory system 106 may communicate a booking confirmation to the reservation system 102 that indicates each passenger name record for which a booking was confirmed from the waitlist (block 380). Therefore, based on corporate recognition support at the inventory system 106 embodiments of the invention may implement automated waitlist clearance that is based at least in part on a corporate identifier and/or corporate value data.

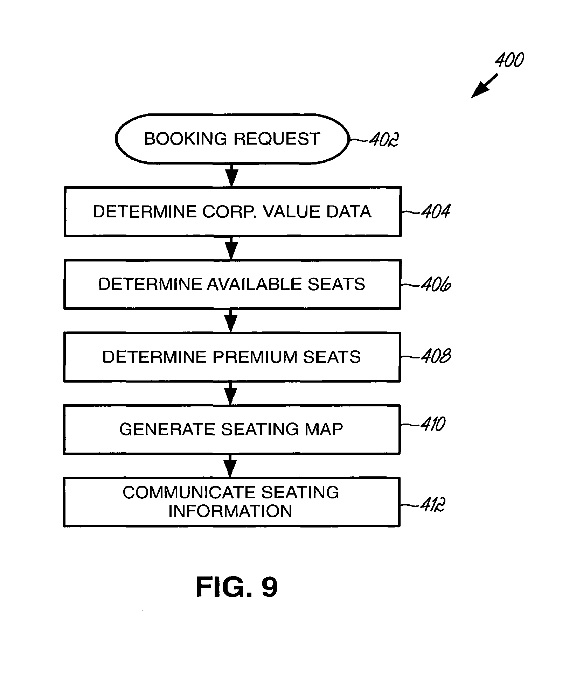

FIG. 9 provides a flowchart 400 that illustrates a sequence of operations that may be performed by the inventory system 106 to define seating options and/or optimize seat allocation for a travel service (e.g., a flight) based at least in part on a corporate identifier and/or corporate value data. As shown, the inventory system 106 may receive a booking request for a passenger name record (block 402), and the inventory system 106 may determine corporate value data and/or the corporate identifier associated with the passenger name record (block 404).

One or more business rules may be selected for determining seat availability for the booking, where some of the business rules may correspond to a corporate identifier and/or be based at least in part on corporate value data. Business rules may comprise, for example, one or more access rules that define preferential access to seats and/or a seat map based on corporate value data; one or more target rules that reserve space/seats for high valued corporate customers and/or define areas where particular types of customers (e.g., high value corporate customers) should be seated; one or more suitability rules that define a relationships between customers and/or customers to seats/facilities; and/or one or more chargeable seat exemption rules which may define customers entitled to an exemption of cost for chargeable seats.

Based on the one or more business rules, corporate identifier, and/or corporate value data, the inventory system 106 determines available seats for the booking request (block 406). Furthermore, the inventory system 106 may determine any premium available seats for the booking request (block 408). In some embodiments of the invention, the inventory system 106 may generate a seat map that, when output, may visually represent available seating options (block 410). The inventory system 106 may communicate seating information that indicates available seats/premium seats for the passenger name record associated with the booking request (block 412). In some embodiments, the seating information may include the generated seat map, which may be communicated to the reservation system 102, the client device 104, and/or a terminal of the departure control system 108 for display such that a user may select a seat from the generated seat map. In these embodiments, the user selection may be communicated to the inventory system 106.

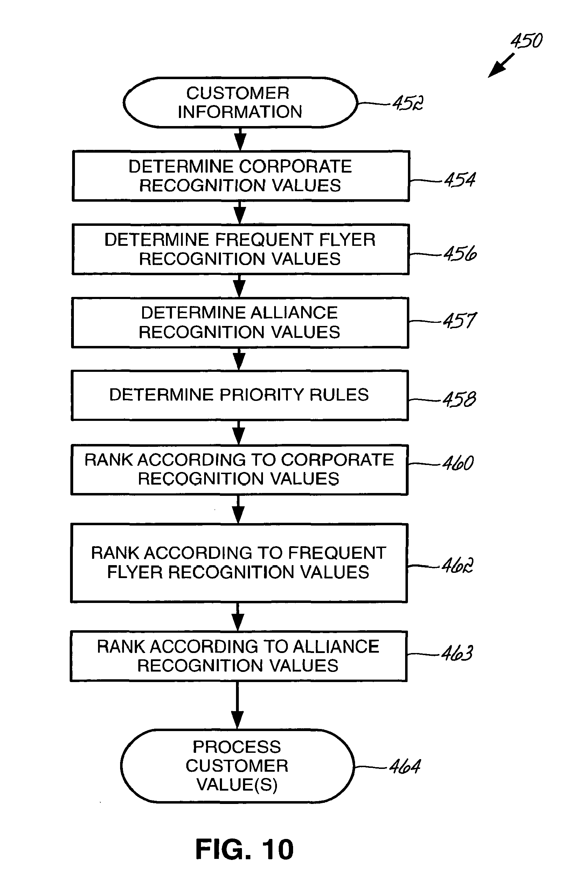

FIG. 10 provides a flowchart 450 that illustrates a sequence of operations that may be performed by the reservation system 102, the inventory system 106, and/or the departure control system to evaluate one or more customers (e.g., potential travelers or confirmed travelers) according to one or more criteria defined by one or more business rules for a given process associated with the respective system 102, 106, 108. As shown, customer information may be input (block 452). In general, the customer information may include data from an associated passenger name record, such as a frequent flyer identifier and/or a corporate identifier. Corporate recognition values from corporate value data associated with each customer are determined (block 454). Generally, the corporate values may be a corporate tier level, a corporate priority code, and/or a corporate customer value. Similarly, frequent flyer recognition values may be determined for each customer (block 456). In general, the frequent flyer recognition values may be a frequent flyer identifier, a frequent flyer tier level, a frequent flyer priority code, frequent flyer miles information, and/or other such information. In some embodiments, alliance recognition values may be determined for each customer (block 457). An alliance may refer to a partnership of travel merchants/providers that may offer combined and/or related travel services. In general, the alliance recognition values may be an alliance customer identifier, an alliance tier level, an alliance priority code, alliance reservation information, and/or other such information regarding travel services provided by the alliance that the customer has reserved and/or used. Collectively, such information may be referred to as alliance related data.

One or more business rules defined by the associated travel merchant corresponding to priority (i.e., priority rules) may be determined from a business rules database (block 458). Based on the priority rules, the customers may be relatively ranked based on their respective corporate recognition values (block 460). The ranking of customers based on the corporate recognition values may be further refined based at least in part on frequent flyer recognition values (block 462). In addition, the ranking of customers based on the corporate recognition values and the frequent flyer recognition values may be further refined based on alliance recognition values (block 463). As such, based on the one or more rankings, a process customer value may be determined for each customer (block 464). While ranking based on corporate recognition values, frequent flyer recognition values, and/or alliance recognition values are illustrated as sequential, it should be appreciated that embodiments of the invention may perform such rankings concurrently and/or in reverse order. Generally, the process customer value for each customer may be used by the reservation system 102, inventory system 106, and/or departure control system 108 to prioritize customers relative to other customers. For example, the departure control system 108 may select one or more customers to be confirmed from standby based at least in part on the process customer value. Similarly, the inventory system 106 may determine one or more customers to be cleared from a waitlist based at least in part on the process customer value. As another example, the reservation system 102 may select one or more customers for an additional service based at least in part on the process customer value.

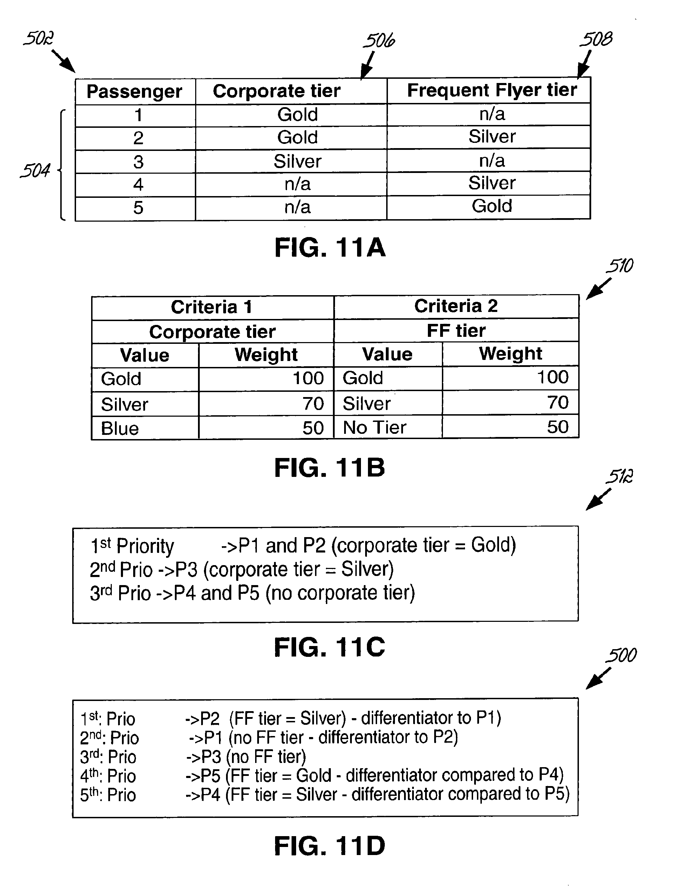

FIGS. 11A-D illustrate an example determination of relative process customer values 500. As shown in FIG. 11A, example customer information 502 for five passengers 504 (also labeled as 'P1', 'P2', 'P3', 'P4', 'P5') including corporate recognition values 506 and frequent flyer recognition values 508 may be processed according to example priority rules 510 of FIG. 11B. As shown, the priority rules 510 indicate that a corporate tier level of 'Gold' is a higher priority (i.e., 'Weight 100') than a corporate tier level of 'Silver' ('Weight 70'), which is in turn a higher priority than corporate tier level 'Blue' ('Weight 50'). Similarly, the priority rules 510 indicate that a frequent flyer tier level of 'Gold' is a higher priority ('Weight 100') than a frequent flyer tier level of 'Silver' ('Weight 70'), which is in turn a higher priority level than a frequent flyer tier level of 'Blue' ('Weight 50').

Based on the priority rules 510 associated with the corporate recognition values 506, the passengers 504 may be ranked according to a corporate priority 512 shown in FIG. 11C. As shown, passengers 'P1' and 'P2' are first priority with the corporate tier level 'Gold'; passenger 'P3' is second priority with a corporate tier level of 'Silver'; and passengers 'P4' and 'P5' are third priority because they do not have a corporate tier level. Based on the priority rules associated with the frequent flyer recognition values 510, the corporate priority 512 may be further refined to determine the customer process values 500 shown in FIG. 11D. As shown, passenger 'P2' has a first priority with a 'Silver' frequent flyer tier level; passenger 'P1' has a second priority because 'P1' is not associated with a frequent flyer tier level; passenger 'P3' has a third priority because 'P3' is not associated with a frequent flyer tier level; passenger 'P5' has a fourth priority because 'P5' has a 'Gold' frequent flyer tier level; and passenger 'P4' has a fifth priority because 'P4' has a 'Silver' frequent flyer priority level.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for managing inventory availability for a plurality of travel inventory items, the method comprising:
receiving, from a reservation system at an inventory system, an availability request for at least one travel inventory item that includes a corporate identifier and corporate value data associated with a passenger name record;
determining, with at least one processor of the inventory system, an effective yield based at least in part on the corporate identifier and corporate value data, and
determining, with the at least one processor of the inventory system, an availability for the at least one travel inventory item based at least in part on the effective yield; and
communicating an availability response from the inventor system to the reservation system that includes the determined availability for the at least one travel inventory item.

2. The method of claim 1, wherein the corporate value data of the availability request comprises a corporate tier level, a corporate priority code, a corporate customer value, or any combination thereof.

3. The method of claim 1 or claim 2 wherein
the effective yield is determined based at least in part on the corporate customer value.

4. The method of any of claims 1 to 3 further comprising:
monitoring, with the at least one processor of the inventory system, travel inventory item availability to determine if a waitlisted travel inventory item becomes available for confirmation; and
in response to determining that the waitlisted travel inventory item became available for confirmation, determining whether to confirm a booking for the waitlisted travel inventory item for the passenger name record based at least in part on the corporate value data.

5. The method of claim 4 further wherein determining whether to confirm the booking for the waitlisted travel inventory item for the passenger name record comprises:
ranking the passenger name record against a plurality of other passenger name records waitlisted for the travel inventory item based at least in part on the corporate value data.

6. The method of claim 4 or claim 5, further comprising:
in response to determining to confirm the booking for the waitlisted travel inventory item, communicating a booking confirmation to the reservation system.

7. The method of any of claims 1 to 6, further comprising:
in response to receiving a booking request for the passenger name record for the at least one travel inventory item, determining available seats for the booking request for the at least one passenger name record based at least in part on the corporate value data.

8. The method of claim 7, further comprising:
generating a possible seat map for the booking request based at least in part on the available seats.

9. The method of claim 7 or claim 8, further comprising:
determining whether predefined premium seats of the at least one travel inventory item are available for the booking request based at least in part on the corporate value data.

10. The method of any of claims 7 to 9, further comprising:
communicating seating information to the reservation system that indicates the determined available seats.

11. A system comprising:
at least one processor; and
a memory coupled with the at least one processor, the memory including program code configured to be executed by the at least one processor to cause the at least one processor to:
receive, from a reservation system, an availability request for at least one travel inventory item that includes a corporate identifier and corporate value data associated with a passenger name record;
determine an availability for the at least one travel inventory item by determining an effective yield based at least in part on the corporate identifier and corporate value data, and determining the availability for the at least one travel inventory item based at least in part on the effective yield; and
communicate an availability response to the reservation system that includes the determined availability for the at least one travel inventory item.

12. The system of claim 11, wherein the program code is configured to cause the at least one processor to perform the method of any of claims 2 to 10.

13. A computer program product comprising:
a computer readable storage medium; and
program code stored on the computer readable storage medium and configured, upon execution, to cause at least one processor to:
receive, from a reservation system, an availability request for at least one travel inventory item that includes a corporate identifier and corporate value data associated with a passenger name record;
determine an effective yield based at least in part on the corporate identifier and corporate value data;
determine an availability for the at least one travel inventory item based at least in part on the effective yield; and
communicate an availability response to the reservation system that includes the determined availability for the at least one travel inventory item.

14. The computer program product of claim 13 wherein the program code is configured, upon execution, to cause the at least one processor to perform the method of any of claims 2 to 10.
